# EUROPÄISCHE PATENTSCHRIFT

(11) **EP 2 747 936 B1**
(45) Veröffentlichungstag und Bekanntmachung des Hinweises auf die Patenterteilung: **19.08.2015**
(21) Anmeldenummer: 12703970.9
(22) Anmeldetag: 03.02.2012
(51) Int. Cl.: B23Q 1/01

(54) **WERKZEUGMASCHINE**
MACHINE TOOL
MACHINE-OUTIL

(30) Priorität: 18.11.2011 DE 202011108058 U
(43) Veröffentlichungstag der Anmeldung: 02.07.2014
(73) Patentinhaber: Deckel Maho Seebach GmbH, 99846 Seebach (DE)
(72) Erfinder: TÜLLMANN, Udo, 99817 Eisenach (DE); KÜMMEL, Stephan, 06463 Falkenstein (Harz) OT Ermsleben (DE)
(74) Vertreter: Beetz & Partner mbB
(86) Internationale Anmeldenummer: PCT/EP2012/000486
(87) Internationale Veröffentlichungsnummer: WO 2013/071984

(56) Entgegenhaltungen:
- CH-A- 225 012
- DE-A1- 4 415 153
- US-A- 2 788 716
- US-A- 4 955 770

## Beschreibung

Die Erfindung betrifft eine Werkzeugmaschine mit einem Maschinengestell, das einen Ständer und einen Maschinenunterbau aufweist, mit einer auf Linearführungen in mindestens einer Koordinatenachse an bzw. auf dem Unterbau motorisch verfahrbaren Werkstückträgeranordnung und mit einer am Ständer angeordneten und in mindestens einer Koordinatenachse motorisch verfahrbaren Bearbeitungseinheit mit einwechselbarem Spanwerkzeug.

Kleinere und preisgünstige Bohr- und Fräsmaschinen sind in der Regel in Kreuztischbauweise ausgeführt, d.h. zwei der drei Hauptachsen sind im Maschinentisch angeordnet, was eine horizontal flächige Ausführung des Maschinenbetts zur Aufnahme der Achsen bedingt. Die am Maschinenbett in den beiden Koordinatenachsen ausgerichteten Linearführungen und deren Linearantriebe müssen gegen Spänefall und Ablagerungen geschützt werden, was regelmäßig durch sog. Teleskop-Abdeckungen aus übereinanderschiebbaren Blechsegmenten erfolgt. Ein Nachteil dieser Teleskop-Abdeckungen aus geformten Blechelementen liegt in der relativ großen überstrichenen Fläche, was eine entsprechende Vergrößerung der Maschinenkabine und der Aufstellfläche der Maschine verlangt. Durch die Notwendigkeit, den Werkstücktisch in einer bedienerfreundlichen Höhe anzuordnen und durch die notwendige stabile Ausbildung des Maschinenbetts können die Abdeckungen nicht in einem für den Spänefall günstigen Neigungswinkel angeordnet werden, sodass während des Betriebs Späne auf den Abdeckungen liegenbleiben, was zu einem frühzeitigen Verschleiß der Abdeckungen insbesondere im Bereich ihrer Stoßkanten führt.

Bei Maschinen in Kreuztischbauweise ist die Oberseite des Maschinenbetts zur Aufnahme der Tischachsen bzw. der Linearführungen in der Regel horizontal flächig ausgebildet. Die im Bett vorgesehenen Austragsrinnen für den Abtransport der Späne können wegen der begrenzten Werkstücktischhöhe und der notwendigen Höhe des Maschinenbettes nur ein sehr geringes Gefälle von bis zu 10° haben. Aufwendige Zusatzeinrichtungen zum Reinigen der jeweiligen Bauteile von den Spänen und zu deren Abtransport durch Spülen oder Blasen sind nicht immer voll wirksam und erhöhen den technischen Aufwand.

Die US 4,955,770 offenbart eine Werkzeugmaschine gemäß dem Oberbegriff der Ansprüche 1 und 6.

Aufgabe der Erfindung ist es, eine Werkzeugmaschine insbesondere zum Fräsen und Bohren zu schaffen, bei der ein verbesserter Spänefall ohne die Notwendigkeit von aufwendigen Zusatzeinrichtungen erreicht wird und die eine verkleinerte Aufstellfläche und Kabinengröße gegenüber Werkzeugmaschinen mit herkömmlichen Abdeckungen aufweist.

Diese Aufgabe wird mit den Merkmalen den Ansprüche 1 und 6 gelöst.

Vorzugsweise hat der Spänefallraum eine von seitlichen Schrägflächen begrenzte Trichterform, was einen günstigen automatischen Spänefall in eine am Trichterboden befindliche Späneentsorgung ermöglicht, wodurch der Aufwand zur Späneabfuhr verringert und die Anzahl an Maschinenstillständen zur Reinigung reduziert werden kann. Nach dem erfindungsgemäßen Konzept sind die Linearführungen und die Antriebselemente zumindest einer Maschinenachse so an dem Maschinenbett angeordnet, dass die Linearführungen und die Antriebselemente von den am Maschinenbett befestigten und damit stationären Abdeckelementen überdeckt und damit vor Spänefall und Kühlmittelablagerungen geschützt sind. Die Abdeckelemente sind Formblechausgebildet und stationär angeordnet, sodass die Führungsschienen und Antriebselemente, beispielsweise die Spindeln der Kugelumlauftriebe, mit ausreichendem Zwischenabstand und in ihrer gesamten wirksamen Länge überdeckt werden.

Ein besonderer Vorteil dieser Anordnung besteht darin, dass die Blechabdeckung die von der Tischbaugruppe bei ihrer Bewegung in Achsrichtung überstrichene Fläche nicht vergrößert, da die Abdeckelemente stationär sind und kein Blockmaß der Abdeckungen eingehalten werden muss. Weiterhin können die Abdeckelemente klein und dünnwandig ausgeführt werden, da sie nur Anlagerungen von Spänen und sonstigen Feststoffen verhindern und ansonsten keinerlei Tragfunktion erfüllen müssen. Die Neigung dieser Abdeckbleche sollte so groß gewählt werden, dass eventuell auftreffende Späne nach unten in die Späneentsorgung abgleiten. Wesentlich bei dem erfindungsgemäßen Konzept ist also, dass der Spänefall gegenüber den bekannten Kreuztischmaschinen ebenso wie der Späneabtransport signifikant verbessert werden, was geringere Nebenzeiten und längere störungsfreie Maschinenlaufzeiten ermöglicht. Ferner können durch den Wegfall herkömmlicher aufwendiger Teleskopabdeckungen die Herstellungskosten vermindert, die Betriebszuverlässigkeit erhöht und insbesondere auch die Kabinengröße sowie die Aufstellfläche der Maschine reduziert werden.

In besonders zweckmäßiger Ausgestaltung der Erfindung ist nur eine der Maschinenhauptachsen, d.h. die Linearführung für das Werkstück, am Maschinenbett angeordnet, während die Linearführungen in den beiden anderen Hauptachsen der Bearbeitungseinheit mit der Arbeitsspindel zugeordnet sind. Dadurch werden komplexe mitbewegte Abdeckungen mit ihren oben beschriebenen Nachteilen nicht mehr benötigt, da die beiden spindelseitigen Linearführungen durch Abdeckungen geschützt werden, die ohne bewegliche Teile auskommen. Um bei diesem Konzept die relativ großen veränderlichen Auskragungen der Spindelpinole zu vermeiden, kann vorteilhaft die Linearführung in der Z-Hauptachse dem Maschinenunterbau zugeordnet werden.

Bei einer anderen zweckmäßigen Ausführung der Erfindung kann eine der beiden Linearführungen für den Werkstücktisch am Unterbau, d.h. an den beiden Seitenwänden des Unterbaus, vorgesehen werden. Bei dieser Anordnung handelt es sich um ein Kreuztisch-Maschinenkonzept, das im Hinblick auf den Spänefall optimiert ist und dessen Aufstellfläche lediglich in Bezug auf die Bettachse minimiert ist.

Bei einer zweckmäßigen Ausbildung der erfindungsgemäßen Werkzeugmaschine sind die Außenseiten der Seitenwände des Maschinenbetts im Wesentlichen vertikal ausgerichtet und zumindest ein Teil der Innenseiten dieser Seitenwände sind zueinander trichterartig geneigt, sodass die bei der Bearbeitung anfallenden Späne auf diesen geneigten inneren Wandseiten zum Bettboden hin gleiten. Vorteilhaft können Falltrichter aus platten- bzw. blechartigen Elementen mit schrägen Seitenflächen zwischen die zwei Seitenwände des Maschinenunterbaus montiert werden, wobei die Innenseiten der Seitenwände dann vertikal, abgesetzt oder anders verlaufen können.

Zweckmäßig ist bei einer Variante an den Innenseiten der beiden Seitenwände je eine Linearführung in der Y-Koordinatenachse vorgesehen, die jeweils von einem streifenförmigen Schutzblech überdeckt ist. Diese an den Seitenwänden befestigten Schutzbleche sollten ebenfalls eine ausreichende Neigung haben, damit die darauffallenden Späne und Flüssigkeiten abgleiten können. Wesentlich ist, dass diese Schutzbleche die Linearführungen vollständig und auf ihrer gesamten Länge überdecken, damit sich keine Späne und andere Stoffe auf diesen Längsführungen ablagern können. Entsprechendes gilt auch für die sich in Längsrichtung erstreckenden Linearantriebe, die hier als sog. Kugelrollspindeln ausgebildet sind. Zweckmäßig ist bei der in Rede stehenden Ausbildung eine Kugelrollspindel im zentralen Bereich zwischen den beiden Linearführungen unterhalb des Werkstücktisches als Antriebselement vorgesehen, die sich parallel zu den beiden Seitenwänden des Betts erstreckt und durch ein abgewinkeltes streifenförmiges Schutzblech überdeckt ist.

Bei einer weiteren Ausführung der erfindungsgemäßen Werkzeugmaschine ist eine erste Linearführung an der Stirnseite des Ständers und eine zweite Linearführung an einem Querträger angeordnet, der sich zwischen den beiden einen Falltrichter bildenden Seitenwänden des Bettes unter dem Werkstücktisch erstreckt. Bei dieser Ausgestaltung kann vorteilhaft die erste Linearführung und ein von einer Kugelumlaufspindel gebildeter Linearantrieb für den Werkstücktisch von einem am Ständer durchgehend befestigten Schutzblechstreifen überdeckt sein, und an dem am Boden oder an den Seitenwänden des Betts starr befestigten biegesteifen Querträger für die zweite Linearführung kann ein sattelartiges längs durchgehendes Schutzblech befestigt sein, das die zweite untere Linearführung überdeckt.

Im Folgenden werden Ausführungsbeispiele der Erfindung anhand der Zeichnung im Einzelnen beschrieben. Es zeigen:
- Fig. 1: ein erstes Ausführungsbeispiel der erfindungsgemäßen Werkzeugmaschine in schematischer Seitenansicht bzw. im Längsschnitt;
- Fig. 2: die Werkzeugmaschine nach Fig. 1 in perspektivischer Darstellung;
- Fig. 3: schematisch das bei dem Ausführungsbeispiel nach Fig. 1 verwirklichte technische Konzept;
- Fig. 4: ein zweites Ausführungsbeispiel der erfindungsgemäßen Werkzeugmaschine in schematischer Perspektive,
- Fig. 5: schematisch das bei dem Ausführungsbeispiel nach Fig. 4 verwirklichte technische Konzept;
- Fig. 6: ein weiteres Ausführungsbeispiel der Erfindung in schematischer Perspektive;
- Fig. 7: schematisch das beim Ausführungsbeispiel nach Fig. 6 verwirklichte technische Konzept.

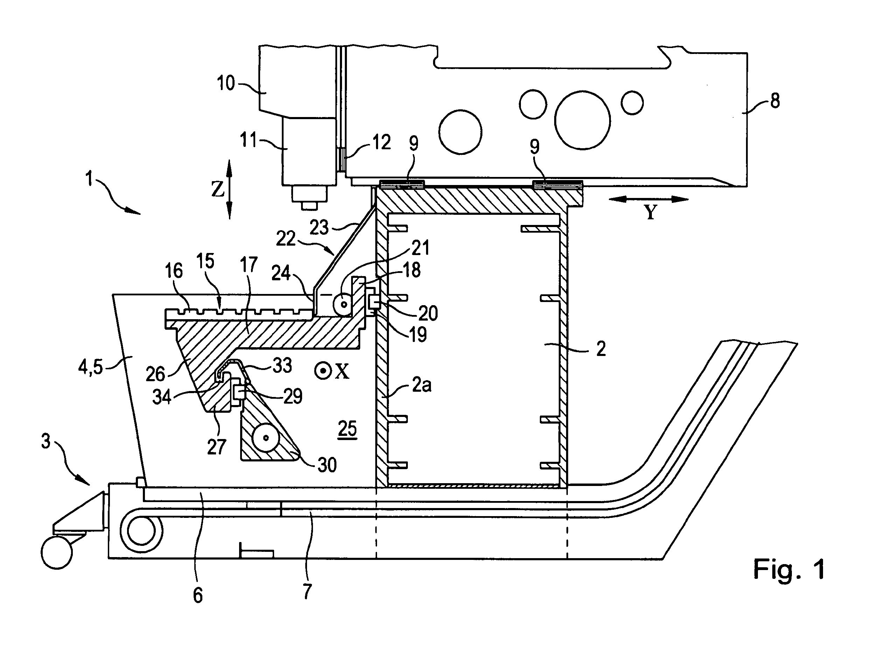

Die dargestellten Werkzeugmaschinen sind dreiachsige Fräs- und Bohrmaschinen. Wie ersichtlich, weist das Maschinengestell 1 einen als Rahmenkonstruktion ausgebildeten stationären Ständer 2 und einen mit diesem vorteilhaft in sog. Monoblockbauweise ausgeführten bettartigen Unterbau 3 auf, der von zwei Seitenwänden 4, 5 und gemäß Fig. 1 einem Boden 6 begrenzt wird. Die Innenseiten der beiden Seitenwände 4, 5 sind zueinander geneigt und bilden einen sich nach unten zum Boden 6 hin verjüngenden Trichter. Die Neigungswinkel der beiden Seitenwände sind so gewählt, dass darauffallende Späne und andere Stoffe nach unten abgleiten. Über dem Boden 6 erstreckt sich eine Späneentsorgung, deren Endlosförderer 7 unter der Rückseite des Ständers 2 herausführt.

Wie in Fig. 1 gezeigt, ist auf der Oberseite des Ständers 2 ein Spindelgehäuse 8 in Linearführungen 9 mittels eines - nicht dargestellten - Motors in Y-Richtung verfahrbar angeordnet. An der Stirnseite dieses Spindelgehäuses 8 ist eine Bearbeitungseinheit 10 mit einer Arbeitsspindel 11 und einem integrierten Spindelmotor in Linearführungen 12 in Richtung der Z-Koordinatenachse motorisch verfahrbar montiert. In dieser Arbeitsspindel 11 können Spanwerkzeuge aus einem - nicht dargestellten - Werkzeugmagazin mittels eines Werkzeugwechslers automatisch ein- und ausgewechselt werden.

Wie weiterhin aus Fig. 1 ersichtlich, ist ein Werkstückträger 15 an der frontseitigen Stirnwand 2a des Ständers 2 in dem Freiraum zwischen den beiden trichterförmig geneigten Seitenwänden 4, 5 angeordnet. Der als Tischkonstruktion ausgebildete Werkstückträger 15 weist eine herkömmliche Spannplatte 16 zur Aufnahme der Werkstücke sowie eine hier als durchgehende dicke Platte dargestellte Tragkonstruktion 17 für die Spannplatte 15 auf. An dem in Fig. 1 rechten Ende der Tragkonstruktion 17 ist ein vertikaler Steg 18 befestigt, an dem Führungsschuhe 19 montiert sind, die mit einer durchgehenden Führungsschiene 20 zusammenwirken, welche an der Außenseite der frontseitigen Stirnwand 2a des Ständers 2 montiert ist und sich über die wirksame Länge des Ständers 2 erstreckt. Neben dem Steg 18 ist bei der dargestellten Ausführung eine Gewindespindel 21 eines Linearantriebs angeordnet, der hier in herkömmlicher Weise als Kugelrollspindel mit - nicht dargestelltem - Antriebsmotor ausgebildet ist.

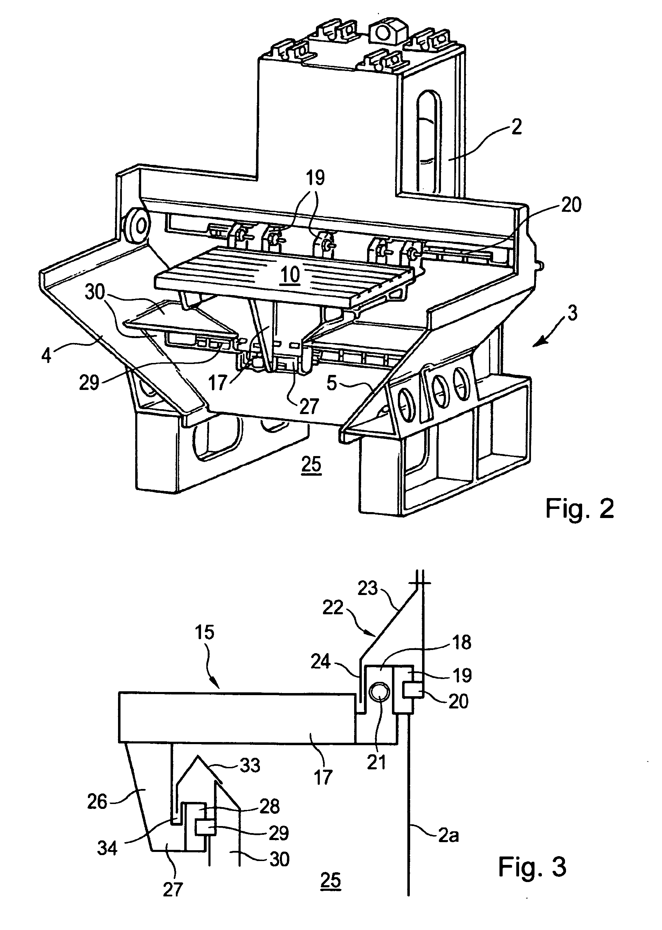

Die Kugelrollspindel 21 und die Führungsschiene 20 werden auf ihrer gesamten Länge von einem Schutzblech 22 überdeckt, das mit seinem oberen Ende an der frontseitigen Ständerwand 2a dauerhaft befestigt ist und sich über die wirksame Länge des Ständers bzw. der Führungsschiene 20 und der Kugelrollspindel 21 erstreckt. Der Mittelteil 23 dieses streifenförmigen Schutzblechs 22 ist unter einem steilen Winkel zur Vertikalen geneigt und begrenzt das ständerseitige Ende des Arbeitsraums. Die in Betrieb anfallenden Späne gleiten auf diesem schrägen Mittelteil 23 des Schutzblechstreifens 22 nach unten und gelangen in den von den beiden Ständer-Seitenwänden 4, 5 begrenzten Spänefallraum 25. Der untere Endbereich 24 des streifenförmigen Schutzblechs 22 verläuft wiederum vertikal und endet unmittelbar oberhalb der Tragkonstruktion 17 des Maschinentischs. Mittels des vorstehend beschriebenen und in den Fig. 1 und 3 dargestellten Schutzblechs 22 wird die Führungsschiene 20 und auch die Gewindespindel 21 des Kugelrollantriebs über die gesamte wirksame Länge in X-Richtung abgedeckt, sodass sich keine Späne oder andere Feststoffe und Spülflüssigkeiten auf diesen Bauteilen absetzen können.

Bei dem Ausführungsbeispiel nach den Fig. 1 bis 3 weist die Tragkonstruktion 17 des Werkstücktischs 16 in ihrem vorderen Bereich einen nach unten gerichteten Ansatz 26 auf, der in einen nach rückwärts abgekröpft ausgebildeten Holm 27 übergeht. An der zum Ständer 2 weisenden Vertikalfläche dieses Holms 27 ist der bewegliche Teil (Schuhe 28) einer Linearführung 28, 29 befestigt, deren in X-Koordinatenachse verlaufende Führungsschiene 29 an einem Querträger 30 befestigt ist. Bei dem dargestellten Ausführungsbeispiel erstreckt sich der Querträger 30 horizontal durch den gesamten Spänefallraum 25 und ist mit seinen beiden Enden an jeweils einer der Ständerseitenwände 4, 5 befestigt. Um den Spänefall im Spänefallraum nicht zu stören, kann die Hypothenusenfläche des im Querschnitt dreieckförmigen Querträgers 30 unter einem Winkel geneigt sein, der das Abgleiten von auftreffenden Spänen auf dieser Schrägfläche gewährleistet (vgl. Fig. 1 und 3). Bei der dargestellten Ausführung ist im Firstbereich des Querträgers 30 ein mehrfach abgewinkeltes streifenförmiges Schutzblech 33 befestigt, dessen in die Vertikale abgewinkelter Endabschnitt in eine Nut 34 am Holm 27 mit vorgegebenem Spiel eingreift und in dieser bewegbar ist. Dieses ortsfeste Schutzblech 33 überdeckt den Querträger 30 über seine gesamte Länge und schützt die Führungsschiene 29 gegen Späneablagerungen. Erreicht wird diese Wirkung durch die Abkröpfung des Ansatzes 26 der Tragkonstruktion 17 und durch die dargestellte Positionierung der Linearführung 28, 30, was eine dachartige Überdeckung durch das Schutzblech 33 ermöglicht.

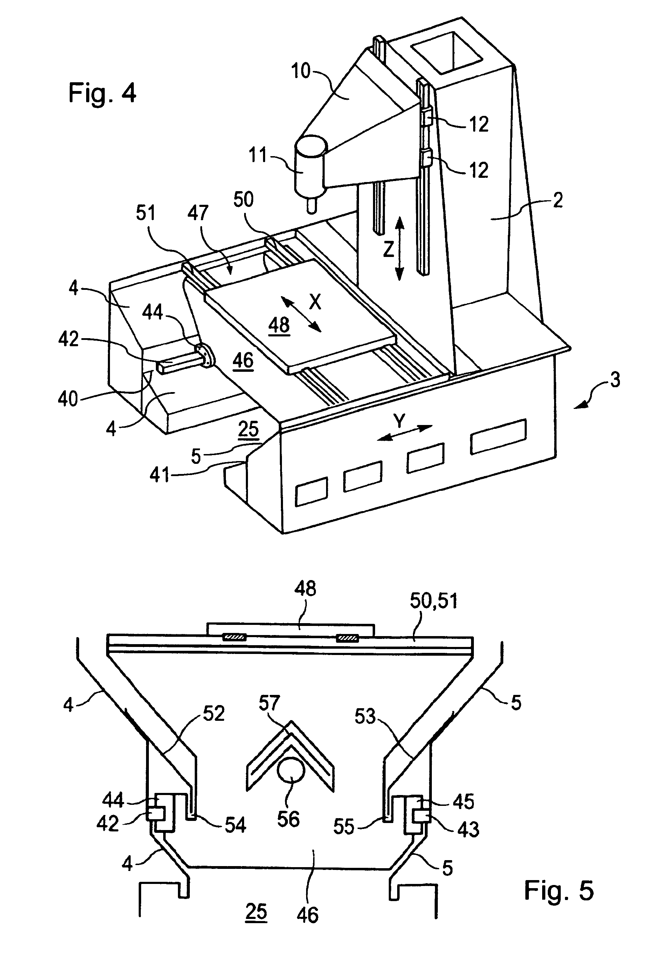

Die in den Figuren 4 und 5 dargestellte programmgesteuerte Fräs- und Bohrmaschine hat ebenfalls eine vertikal ausgerichtete Bearbeitungseinheit 11, die an einem in der vertikalen Z-Achse mittels Linearführungen 12 geführten Spindelstock 10 befestigt ist. Auch bei diesem Ausführungsbeispiel begrenzen die beiden schräg nach innen geneigten Seitenwände 4, 5 des Betts 3 einen trichterförmigen Spänefallraum, in dessen Bodenbereich eine - in Fig. 2, 4 nicht dargestellte - Späneaustragsvorrichtung angeordnet ist. In einem Absatz 40, 41 in jeder Seitenwand 4, 5 ist je eine Linearführung vorgesehen, deren Führungsschiene 42, 43 an der Seitenwand 4, 5 befestigt ist. Die beiden Führungsschuhe 44, 45 dieser Linearführung tragen konsolenartige Wandelemente 46 einer Trägeranordnung 47, die einen Werkstücktisch 48 trägt. Die Trägeranordnung 47 ist aus vertikalen und hochsteifen Wandelementen 46 zusammengebaut und ist an den Führungsschienen 42, 43 in Richtung der horizontalen Y-Koordinatenachse mittels eines - nicht dargestellten - Linearantriebs verfahrbar. Der Werkstücktisch 48 der Trägeranordnung 47 ist in Richtung der horizontalen X-Koordinatenachse auf Führungsschienen 50, 51 mittels eines - nicht dargestellten - Linearmotors verfahrbar. Wie in Fig. 5 gezeigt, sind auch bei diesem Ausführungsbeispiel streifenförmige Schutzbleche vorgesehen, und zwar jeweils ein streifenförmiges Schutzblech 52 im Bereich der Seitenwand 4 und ein weiteres streifenförmiges Schutzblech 53 im Bereich der anderen Seitenwand 5. Die beiden vorgenannten Schutzbleche 52, 53 überspannen die beiden Linearführungen 42, 43 und greifen mit ihren vertikalen Endabschnitten in eine Nut 54, 55 im Konsolenbauteil 46. Ferner ist im zentralen Bereich ein Schneckentrieb 56 angeordnet, der von einem winkelförmigen Schutzblech 57 überdeckt und gegen Späneablagerungen geschützt ist.

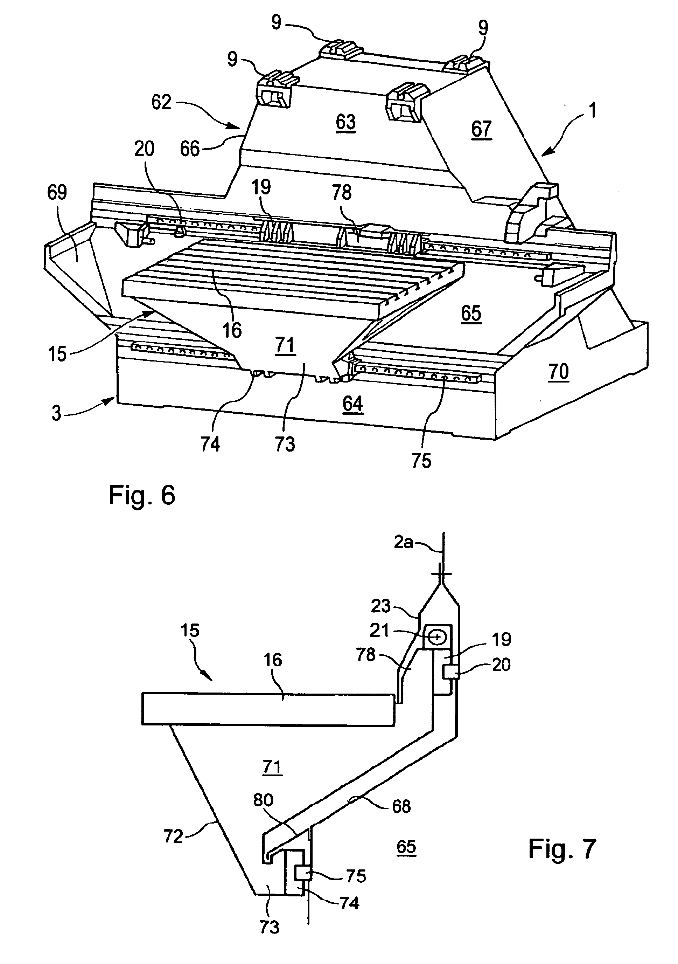

Das in den Fig. 6 und 7 dargestellte Ausführungsbeispiel der Erfindung entspricht in seinem technischen Konzept weitgehend dem Ausführungsbeispiel nach Fig. 1 bis 3, wobei jeweils gleiche Bauteile mit denselben Bezugszeichen gekennzeichnet werden.

Nach Fig. 6 weist das Maschinengestell 1 einen gegenüber der Ausführung nach Fig. 1 bis 3 abgeänderten Ständer 62 auf, der ein schmaleres Oberteil 63 und einen breiten bettartigen Unterbau 64 enthält, wobei diese beiden Teile des Ständers über ein vorspringendes Mittelteil 65 in Monoblock-Bauweise miteinander verbunden sind. Nach beiden Seiten hin wird der Ständer 62 von durchgehenden schrägen Seitenflächen 66, 67 begrenzt. Die Stirnfläche 68 des Ständermittelteils ist eine Schrägfläche (vgl. Fig. 7), deren Neigung so gewählt ist, dass sich anlagernde Späne und andere Feststoffe nach unten abgleiten. Entsprechendes gilt auch für die beiden Seitenwände 69, 70, die den Unterbau seitlich begrenzen und die entweder mit dem Unterbau integriert ausgeführt oder als gesonderte Wandelemente eingebaut sein können. Die Innenflächen dieser beiden Seitenwände 69, 70 begrenzen einen trichterförmigen Spänefallraum, dessen maschinenseitige Rückwand von der Schrägfläche 68 des Ständermittelteils 65 begrenzt wird.

Auch bei dem Ausführungsbeispiel nach Fig. 6 ist - in ähnlicher Weise wie bei der Ausführung nach Fig. 1 - ein Werkstückträger 15 an der frontseitigen Stirnwand des Ständers 62 in dem Freiraum zwischen den beiden trichterförmig geneigten Seitenwänden 69, 70 angeordnet. Die Konstruktion des Werkstücktischträgers 15 bei der Ausführung nach Fig. 6 entspricht weitgehend der des Tischträgers 15 nach Fig. 1. Dies gilt insbesondere für die in den Figuren 3 und 7 rechts oben dargestellte Traglagerung der Werkstückträgerkonstruktion, sodass auch gleiche Bezugszeichen verwendet werden. Auf die entsprechenden Ausführungen zu Fig. 3 wird verwiesen.

Das Ausführungsbeispiel nach Fig. 6, 7 unterscheidet sich von dem Ausführungsbeispiel nach Fig. 1 bis 3 nicht nur durch die andere Form des Maschinenständers, sondern auch durch eine andere Abstützung der Spannplatte 16 des Werkstückträgers 15 am Maschinenständer 2. Die Spannplatte 16 wird von einer Konsole 71 getragen, die eine vordere Schrägfläche 72 und an ihrem unteren Endbereich einen zur Ständerseite hin abgekröpften Ansatz 73 aufweist. An der vertikalen Stirnfläche dieses Ansatzes 73 sind Führungsschuhe 74 befestigt, die in einer ständerfesten Führungsschiene 75 laufen. Wie aus Fig. 6 ersichtlich, ist die Führungsanordnung der Konsole 71 wesentlich schmaler als der Konsolenoberteil. Die obere Führungsanordnung weist am rechten Ende der Spannplatte 16 einen nach oben ragenden Steg 78 auf, an dessen rechter Vertikalseite die Führungsschuhe 19 befestigt sind.

Das vorstehend anhand der Figuren 6 und 7 beschriebene Ausführungsbeispiel hat hinsichtlich Standfläche und Spänefall die gleichen Vorzüge wie das Ausführungsbeispiel nach Fig. 1 bis 3. Vorteilhafter sind allerdings eine besondere Steifigkeit und günstige Schwingungseigenschaften, was u.a. durch die Traglagerung und Abstützung der Tischkonstruktion direkt an der Frontseite des Maschinenständers erzielt wird. Weiterhin ergibt sich ein besonders günstiger Sammelraum für die Späne, Kühlschmierstoff und andere Partikel durch die nach vorn ausreichend geneigte Rückwand des Spänefallraumes, der dadurch nicht nur von zwei seitlichen Schrägflächen 69, 70, sondern auch von der rückwärtigen Schrägfläche 68 begrenzt wird.

Die Erfindung ist nicht auf die dargestellten und vorstehend beschriebenen Ausführungsbeispiele beschränkt. So ist es beispielsweise nicht unbedingt notwendig, dass der Spänefalltrichter unmittelbar von den Innenseiten der beiden Seitenwände des Maschinenbetts begrenzt wird. Stattdessen können auch schräge Blech- oder Plattenelemente verwendet werden, die ggf. auch nachträglich eingebaut werden könnten.

## Patentansprüche

1. Programmgesteuerte Werkzeugmaschine zur spanenden Bearbeitung von Werkstücken mit
- einem Maschinengestell (1), das einen Ständer (2) und einen Maschinenunterbau (3) mit zwei Seitenwänden (4, 5) aufweist,
- einer auf horizontalen Linearführungen (19, 20, 29, 30; 74, 75) mittels Linearantrieben (21) motorisch verfahrbaren Werkstückträgeranordnung (15) und
- einer am Ständer (2) angeordneten und in mindestens einer Koordinatenachse motorisch verfahrbaren Bearbeitungseinheit (11) mit einwechselbarem Spanwerkzeug,
- wobei die Linearführungen der Werkstückträgeranordnung (15) von Abdeckelementen (22, 33; 23, 80) überdeckt und dadurch gegen Späneablagerungen geschützt sind,
**dadurch gekennzeichnet, dass**
- die Abdeckelemente als ortsfeste und längs durchgehende Formblechstreifen (22, 33; 23, 80) ausgebildet sind,
- eine an der frontseitigen Stirnwand (2a) des Ständers (2) angeordnete erste Linearführung (19, 20) und ihr Linearantrieb (21) von einem ebenfalls an der frontseitigen Stirnwand (2a) dauerhaft befestigten Formblechstreifen (22) überdeckt sind, der sich als Schutzblech über die wirksame Länge der Linearführung (19, 20) erstreckt, und
- zwischen den beiden Seitenwänden (4, 5) ein Querträger (30; 65) für eine zweite Linearführung angeordnet ist, auf der sich der Werkstückträger (15) abstützt, und die von einem am Querträger (30; 65) befestigten Formblechstreifen (33; 80) überdeckt ist.

2. Werkzeugmaschine nach Anspruch 1,
**dadurch gekennzeichnet, dass**
der die erste Linearführung (19, 20) überdeckende Formblechstreifen (22, 23) mit seinem oberen Endabschnitt an der frontseitigen Stirnwand (2a) des Ständers durchgehend befestigt ist.

3. Werkzeugmaschine nach Anspruch 1 oder 2,
**dadurch gekennzeichnet, dass**
der die erste Linearführung (19, 20) überdeckende Formblechstreifen (22) einen unter einem steilen Winkel zur Vertikalen geneigten Mittelteil (23) aufweist, der die Linearführung (19, 20) über deren gesamte wirksame Länge mit Freiraum überdeckt, und der in einen vertikalen unteren Endabschnitt (24) übergeht, der unmittelbar oberhalb des verfahrbaren Maschinenteils (17) endet.

4. Werkzeugmaschine nach einem der vorstehenden Ansprüche,
**dadurch gekennzeichnet, dass**
der Innenraum zwischen den beiden Seitenwänden (4, 5; 69, 70) des Maschinenunterbaus (3) von zueinander geneigt angeordneten Rutschflächen begrenzt ist, die einen Spänefalltrichter (25) bilden.

5. Werkzeugmaschine nach einem der vorstehenden Ansprüche,
**dadurch gekennzeichnet, dass**
die untere Linearführung (74, 75) unterhalb einer nach vorn weisenden Schrägfläche (68) eines vorspringenden Ständermittelteils (65) angeordnet und von einem durchgehenden Formblechstreifen (80) abgedeckt ist, wobei der vorspringende Ständermittelteil (65) den Querträger bildet.

6. Werkzeugmaschine zur programmgesteuerten spanenden Bearbeitung von Werkstücken mit
- einem Maschinengestell (1), das einen Ständer (2) und einen Maschinenunterbau (3) mit zwei Seitenwänden (4, 5) aufweist,
- einer auf horizontalen Linearführungen (42, 43, 44, 45) mittels Linearantrieben (56) motorisch verfahrbaren Werkstückträgeranordnung (47) und
- einer am Ständer (2) angeordneten und in mindestens einer Koordinatenachse motorisch verfahrbaren Bearbeitungseinheit (11) mit einwechselbarem Spanwerkzeug,
- wobei die Linearführungen (42-45) der Werkstückträgeranordnung (47) von Abdeckelementen (52, 53) überdeckt und dadurch gegen Späneablagerungen geschützt sind,
**dadurch gekennzeichnet, dass**
- an jeder Seitenwand (4, 5) des Ständers (2) je eine Linearführung (42, 44, 43, 45) vorgesehen ist,
- jede Linearführung von einem an der zugehörigen Seitenwand (4, 5) befestigten Abdeckelement (52, 53) überdeckt ist, und
- die Abdeckelemente (52, 53) als ortsfeste und längs durchgehende Formblechstreifen ausgebildet sind.

7. Werkzeugmaschine nach einem der vorstehenden Ansprüche,
**dadurch gekennzeichnet, dass**
die Formblechstreifen nur mit ihrem oberen Rand an dem zugehörigen ortsfesten Maschinenteil (2a; 4, 5) befestigt sind.

8. Werkzeugmaschine nach Anspruch 6 oder 7,
**dadurch gekennzeichnet, dass**
an jeder Seitenwand (4, 5) je eine in Y-Koordinatenrichtung verlaufende Linearführung (42-45) und im mittleren Bereich unterhalb der Werkstückträgeranordnung (47) eine Antriebseinheit (56) angeordnet sind, die durch jeweils einen Formblechstreifen (52, 53, 57) gegen Späneablagerungen geschützt sind.

9. Werkzeugmaschine nach einem der vorstehenden Ansprüche,
**dadurch gekennzeichnet, dass**
die Werkstückträgeranordnung (47) vertikale Wandelemente (46) als Tragorgane für zwei parallele Führungsschienen (50, 51) enthält, auf denen ein Werkstückspanntisch (38) in Richtung der X-Koordinatenachse verfahrbar montiert ist.

10. Werkzeugmaschine nach einem der vorstehenden Ansprüche,
**dadurch gekennzeichnet, dass**
der Ständer (2) und der Unterbau (3) des Maschinengestells (1) in integrierter Monoblockbauweise ausgeführt sind.

11. Werkzeugmaschine nach einem der vorstehenden Ansprüche,
**dadurch gekennzeichnet, dass**
der Ständer tetraederartig ausgebildet ist und einen schmalen Oberteil (63), einen die vorderseitige Schrägfläche (68) enthaltenden Mittelteil (65) und einen den Unterbau (3) mit den beiden schrägen Seitenwänden (69, 70) enthaltenden-breiteren Unterbau (64) aufweist, wobei der Ständer (62) beidseitig von schrägen Seitenflächen (66, 67) begrenzt wird.

## Claims

1. A program-controlled machine tool for machining workpieces, comprising
- a machine frame (1), which has a column (2) and a machine base (3) with two side walls (4, 5),
- a workpiece support system (15) movable by a motor along horizontal linear guides (19, 20, 29, 30; 74, 75) using linear drives (21), and
- a machining unit (11), which is attached to the column (2), can be moved by a motor along at least one coordinate axis and includes an exchangeable cutting tool,
- wherein the linear guides of the workpiece support system (15) are covered by cover members (22, 33; 23, 80) so as to be protected against chip deposits,
**characterized in that**
- the cover members are made as stationary and longitudinally continuous profiled sheet strips (22, 33; 23, 80),
- a first linear guide (19, 20), which is attached to the front-side end wall (2a) of the column (2), and the linear drive (21) thereof are covered by a profiled sheet strip (22), which is also permanently mounted on the front-side end wall (2a) and extends as a protective sheet over the effective length of the linear guide (19, 20), and
- a crossbar (30; 65) for a second linear guide is arranged between the two side walls (4, 5), said second linear guide supporting the workpiece support (15) and being covered by a profiled sheet strip (33; 80) that is mounted on the crossbar (30; 65).

2. The machine tool according to claim 1,
**characterized in that**
the profiled sheet strip (22, 23) covering the first linear guide (19, 20) is mounted continuously on the front-side end wall (2a) of the column via the upper end portion thereof.

3. The machine tool according to claim 1 or 2,
**characterized in that**
the profiled sheet strip (22) covering the first linear guide (19, 20) has a central part (23), which is inclined at a steep angle towards the vertical line, covers the linear guide (19, 20) over the entire effective length thereof with leaving a free space and passes into a vertical lower end portion (24) that ends directly above the movable machine part (17).

4. The machine tool according to any of the preceding claims,
**characterized in that**
the interior space between the two side walls (4, 5; 69, 70) of the machine base (3) is confined by sliding surfaces which are arranged so as to be inclined towards each other and form a chip fall funnel (25).

5. The machine tool according to any of the preceding claims,
**characterized in that**
the lower linear guide (74, 75) is arranged below a forward-facing inclined face (68) of a protruding central column part (65) and is covered by a continuous profiled sheet strip (80), wherein the protruding central column part (65) forms the crossbar.

6. A machine tool for the program-controlled machining of workpieces, comprising
- a machine frame (1), which has a column (2) and a machine base (3) with two side walls (4, 5),
- a workpiece support system (47) movable by a motor along horizontal linear guides (42, 43, 44, 45) using linear drives (56), and
- a machining unit (11) which is attached to the column (2), can be moved by a motor along at least one coordinate axis and includes an exchangeable cutting tool,
- wherein the linear guides (42-45) of the workpiece support system (47) are covered by cover members (52, 53) so as to be protected against chip deposits,
**characterized in that**
- one linear guide (42, 43, 44, 45) each is provided on each side wall (4, 5) of the column (2),
- each linear guide is covered by a cover member (52, 53) mounted on the associated side wall (4, 5), and
- the cover members (52, 53) are designed as stationary and longitudinally continuous profiled sheet strips.

7. The machine too! according to any of the preceding claims,
**characterized in that**
the profiled sheet strips are mounted on the associated stationary machine part (2a; 4, 5) only via the upper edge thereof.

8. The machine tool according to claim 6 or 7,
**characterized in that**
each side wall (4, 5) is provided with a linear guide (42-45) extending in the Y-coordinate axis and a drive unit (56) in the central region below the workpiece support system (47), which are protected in each case against chip deposits by one profiled sheet strip (52, 53, 57) .

9. The machine tool according to any of the preceding claims,
**characterized in that**
the workpiece support system (47) contains vertical wall members (46) as support means for two parallel guide rails (50, 51) on which a workpiece clamping table (38) is mounted so as to be movable in the direction of the x-coordinate axis.

10. The machine tool according to any of the preceding claims,
**characterized in that**
the column (2) and the base (3) of the machine frame (1) are made in an integrated monoblock construction.

11. The machine tool according to any of the preceding claims,
**characterized in that**
the column is made as a tetrahedron and has a narrow top part (63), a central part (65) containing the front-side inclined face (68) and a wider base (64) containing the base (3) with the two inclined side walls (69, 70), wherein the column (62) is confined on both sides by inclined side faces (66, 67).

## Revendications

1. Machine-outil commandée par programme pour l'usinage de pièces avec formation de copeaux comportant
- un bâti de machine (1) présentant un montant (2) et une infrastructure de machine (3) avec deux parois latérales (4, 5) ;
- un dispositif support pour pièces à usiner (15) pouvant être déplacé de manière motorisée au moyen d'entraînements linéaires (21) sur des rails de guidage horizontaux (19, 20, 29, 30 ; 74, 75) et
- une unité d'usinage (11) avec outil de serrage interchangeable, placée sur le montant (2) et déplaçable de manière motorisée sur au moins un axe des coordonnées,
- dans laquelle les rails de guidage linéaires du dispositif support pour pièces à usiner (15) sont recouverts par des éléments de recouvrement (22, 33 ; 23, 80) et sont ainsi protégés contre les dépôts de copeaux,
**caractérisée en ce que**
- les éléments de recouvrement sont formés de bandes de tôles profilées fixes et s'étendant en continu dans le sens longitudinal (22, 33 ; 23, 80),
- un premier rail de guidage linéaire (19, 20) et son entraînement linéaire (21), situés sur la paroi frontale avant (2a) du montant (2), sont recouverts par une bande de tôle profilée (22) également fixée en continu sur la paroi frontale avant (2a) faisant office de tôle de protection sur toute la longueur effective du rail de guidage (19, 20), et
- entre les deux parois latérales (4, 5) se trouve une poutre transversale (30 ; 65) pour un deuxième rail de guidage, sur laquelle repose le dispositif support pour pièces à usiner (15) et qui est recouverte par une bande de tôle profilée (33 ; 80) fixée sur la poutre (30 ; 65).

2. Machine-outil selon la revendication 1,
**caractérisée en ce que**
la première bande de tôle profilée (22, 23) recouvrant le premier rail de guidage linéaire (19, 20) est fixée en continu par sa partie d'extrémité supérieure à la paroi frontale avant (2a) du montant.

3. Machine-outil selon les revendications 1 ou 2,
**caractérisée en ce que**
la première bande de tôle profilée (22) recouvrant le premier rail de guidage linéaire (19, 20) présente une partie intermédiaire (23) inclinée selon un angle aigu par rapport à la verticale et recouvrant avec un espace libre l'entraînement linéaire (19, 29) sur toute sa longueur effective, qui se poursuit par une partie terminale inférieure verticale s'arrêtant juste au-dessus de la partie de machine déplaçable (17).

4. Machine-outil selon l'une quelconque des revendications précédentes,
**caractérisée en ce que**
l'espace intermédiaire entre les deux parois latérales (4, 5 ; 69, 70) de l'infrastructure de la machine (3) est limité par des surfaces de glissement inclinées les unes par rapport aux autres de façon à former un entonnoir de descente de copeaux (25).

5. Machine-outil selon l'une quelconque des revendications précédentes,
**caractérisée en ce que**
le rail de guidage inférieur (74, 75) est placé sous l'une des surfaces inclinées vers l'avant (68) d'une partie intermédiaire proéminente du montant (65) et est recouvert en continu par une bande de tôle profilée (80), la partie intermédiaire proéminente du montant (65) constituant la poutre transversale.

6. Machine-outil commandée par programme pour l'usinage de pièces avec formation de copeaux comportant
- un bâti de machine (1) présentant un montant (2) et une infrastructure de machine (3) avec deux parois latérales (4, 5) ;
- un dispositif support pour pièces à usiner (47) pouvant être déplacé de manière motorisée au moyen d'entraînements linéaires (56) sur des rails de guidage horizontaux (42, 43, 44, 45) et
- une unité d'usinage équipée d'un outil de serrage interchangeable, placée sur le montant (2) et déplaçable de manière motorisée sur au moins un axe des coordonnées,
- dans laquelle les rails de guidage linéaires (42-45) du dispositif support pour pièces à usiner (47) sont recouverts par des éléments de recouvrement (52, 53) et sont ainsi protégés contre les dépôts de copeaux, **caractérisée en ce que**
- sur chaque paroi latérale (4, 5) du montant (2) est prévu un entraînement linéaire (42, 43, 44, 45),
- chaque rail de guidage linéaire (19, 20) est recouvert par un élément de recouvrement (52, 53) fixé à la paroi latérale correspondante (4, 5), et
- les éléments de recouvrement (52, 53) sont constitués de bandes de tôles profilées fixes et s'étendant en continu dans le sens longirudinal.

7. Machine-outil selon l'une quelconque des revendications précédentes,
**caractérisée en ce que**
les bandes de tôle profilées ne sont fixées à la partie de machine fixe correspondante (2a ; 4, 5) que par leur bord supérieur.

8. Machine-outil selon les revendications 6 ou 7,
**caractérisée en ce que**
sur chaque paroi latérale (4, 5) sont disposés un entraînement linéaire le long de l'axe des coordonnées Y (42, 45) et une unité d'entraînement (56) placée dans la partie intermédiaire en dessous du dispositif support pour pièces à usiner (47), chacun étant protégé contre les dépôts de copeaux par une bande de tôle profilée (52, 53, 57).

9. Machine-outil selon l'une quelconque des revendications précédentes,
**caractérisée en ce que**
le dispositif support pour pièces à usiner (47) comprend des éléments de paroi verticaux (46) en tant qu'organes supports de deux rails de guidage parallèles (50,51), sur lesquels est montée une table de serrage pour pièces à usiner (38) déplaçable le long de l'axe des coordonnées X.

10. Machine-outil selon l'une quelconque des revendications précédentes,
**caractérisée en ce que**
le montant (2) et l'infrastructure (3) du bâti de machine (1) présentent une construction intégrée de type monobloc.

11. Machine-outil selon l'une quelconque des revendications précédentes,
**caractérisée en ce que**
le montant a la forme d'un tétraèdre et présente une partie supérieure étroite (63), une partie intermédiaire (66) contenant les surfaces inclinées à l'avant, ainsi qu'une infrastructure plus large contenant l'infrastructure (3) et ses deux parois latérales inclinées (69, 70), le montant (62) étant limité des deux côtés par des surfaces latérales inclinées (66, 67).
